# EUROPEAN PATENT SPECIFICATION

(11) **EP 4 630 327 B1**
(45) Date of publication and mention of the grant of the patent: **02.12.2026**
(21) Application number: 23824994.0
(22) Date of filing: 11.12.2023
(51) Int. Cl.: B65D 17/28, B65D 81/32

(54) **IMPROVED HOP FLAVOUR IN CANNED BEER**
VERBESSERTER HOPFENGESCHMACK IN KONSERVENBIER
ARÔME DE HOUBLON AMÉLIORÉ DANS DE LA BIÈRE EN CANETTE

(30) Priority: 09.12.2022 US 202263431379 P; 19.12.2022 EP 22214724
(43) Date of publication of application: 15.10.2025
(73) Proprietor: Heineken Supply Chain B.V., 1017 ZD Amsterdam (NL)
(72) Inventor: MARSHALL, Jeremy Daniel, 1017 ZD Amsterdam (NL); DONALDSON, Bryan Robert, 1017 ZD Amsterdam (NL); DE GROOT, Allard, 1017 ZD Amsterdam (NL)
(74) Representative: V.O.
(86) International application number: PCT/NL2023/050651
(87) International publication number: WO 2024/123183

(56) References cited:
- WO-A1-99/42377
- IT-A1- 202000 004 270
- US-A1- 2010 224 511
- US-A1- 2022 089 321

## Description

### TECHNICAL FIELD

The aspects and embodiments thereof relate to field of canned beer.

### BACKGROUND

Beer is typically brewed using hops, which are the flowers of the hop plant *Humulus lupulus.* The hops are commonly used as a flavouring agent to add bitter, floral, fruity, and/or citrussy notes to the beer.

It is known that the hop flavour in beer diminishes over time. This is particular observed in beers of a beer style which has a hoppy flavour profile and/or hoppy aroma profile, such as India Pale Ales (IPA). As such, consumers now have to consume these beers within a short timespan after the beer has been produced.

In order to increase hop flavour in beer, for example dry hopping is used. This hopping technique involves adding hops late in the brewing process, for example in the fermentation tanks, after the wort has been cooled down.

US2022089321A1 discloses an infusion septum for a beverage container and an infusion septum that is integrated within a beverage can end or a container cap and a method of infusion.

US2010224511A1 discloses a beverage can having a primary fluid volume and a segregated secondary container. The secondary container could contain a liquid or a granulated solid. The two containers are separated by a barrier which can be opened. The beverage can has a lid with a conventional pull-tab and downward-opening hatch. However, the hatch is equipped with a piercer extending down into the can. When the pull-tab is actuated, the piercer breaches the barrier separating the secondary container from the primary fluid volume. The contents of the secondary container can then be mixed with the primary fluid.

To provide consumers with beer with an improved level of hop flavour compared to beer in known beverage cans, the present disclosure in a first aspect provides a beverage can, comprising a can body with a primary volume at least partially filled with a beer. The beverage can further comprises a secondary compartment positioned inside the primary volume and defining a secondary volume, the secondary volume being at least partially filled with hop compounds. The secondary compartment comprises a separator separating the secondary volume from the beer. The beverage can further comprises a lid, sealing a top opening of the can body, and an opening mechanism for opening an opening in the lid.

The opening mechanism is arranged to, when actuated by a user, open the opening in the lid such that the beer can be poured through said opening, and break the separator such that the hop compounds in the secondary volume are exposed to the beer in the primary volume. Preferably, the hop compounds are allowed to fall into the beer after actuation of the opening mechanism by virtue of gravity.

By keeping the hop compounds separated from the beer during transport and storage of the beverage can, deterioration of the hop flavours of the hop compounds may be reduced compared to a situation wherein the hop compounds would have been added to the beer prior to transport and storage. It will be appreciated that the beer in the beverage can may be essentially free of hop compounds, or conceivably can also comprise hop compounds.

Providing the beer and the hop compounds in a single beverage can may be convenient to the consumer, as it requires purchase, transport, and storage of a single item - compared to having to purchase, transport, and store beer and hop compounds separately. Furthermore, by providing the beer and the hop compounds in a single beverage can, it may be ensured that the correct ratio of beverage and hop compounds is obtained, and the consumer is not burdened with dosing the correct amount of hop compounds for the volume of beer present in the beverage can.

Hops typically comprise chemical compounds such as alpha acids, such as humulones (α-lupulic acids), iso-alpha acids, such as isohumulones, beta acids, such as lupulones, essentials oils, and flavonoids such as xanthohumol. These hop compounds may be of natural origin - *i.e.* from actual hop plants, in particular from flowers of the hop plant *Humulus lupulus* - or conceivably may be synthesised.

Because the hop compounds are now kept separate from the beer, the hop compounds may be provided as solid particles compared to conventional beers where all of the hop compounds are dissolved in the beer, also during transport and storage of the beverage can in which the beer is stored.

Preferably, but not necessarily, the hop compounds are provided as a granular material. Such a granular material comprises discrete particles, which may be counted. Typically, the discrete particles remain discrete particles while present in the secondary compartment. A powder is also understood to be a granular material, with particles with a particularly small particle size. For example, the hop compounds may be provided as encapsulated hop oils. Additionally or alternatively, the hop compounds may be provided in liquid form. Hop compounds in liquid form may dissolve more easily in the beer.

When the hop compounds are provided as discrete particles, it may occur that not all particles fall into the beer directly when the separator is broken. For example, one or more particles may remain trapped in the secondary volume also while the beer is poured from the opening of the can body. One or more particles may for example remain trapped behind the separator.

When one or more particles remain trapped until the beverage can is completely emptied, the desired amount of hop flavours in the beer is not achieved. However, with an increased number of particles, the effect of one or more particles remaining trapped is lower compared to a situation wherein the hop compounds are provided by a lower number of particles. For example, when one of only two particles remains trapped, the desired amount of added hop flavours is halved. If one of a total of ten particles remains trapped, the desired amount of added hop flavours is only decreased by 10%.

Additionally or alternatively, when or more particles are trapped in the secondary compartment and are only released into the beer after some of the beer has already been poured from the beverage can, the level of hop flavour in the remaining beer may become too high.

To decrease the effect that a single particle has on the total hop flavour level of the beer, it may be preferred that more than ten particles, more than twenty particles, more than fifty particles, or even more than 100 particles are present in the secondary compartment. In any combination, the hop compounds may also be provided as at most 100 particles, at most fifty particles, or even at most twenty particles.

It will be appreciated that in any embodiment of the beverage can disclosed herein, next to hop compounds, also other compounds can be present in the secondary volume. These other compounds may for example be used to dilute the hop compounds such that the same amount of hop compounds can be divided over a larger number of discrete particles.

In any embodiment of any beverage can disclosed herein in the secondary compartment at least 5 milligrams of hop compounds per mL of beer in the primary volume may be present, or even at least 10 milligrams of hop compounds per mL of beer in the primary volume.

A can, also referred to as drink can or beverage can, is a beverage container arranged to hold a particular volume of beverage, such as 300 ml, 330 ml, 500 ml, or any other volume. Typically, a can is made from a metal such as aluminium or tin-plated steel. Modern cans comprise a can body, and a lid which is typically connected to the can body using a roll seam. In the lid, a weakened section is provided which can be opened by a user action. Typically, the lid is provided with a pull tab as an opening mechanism, which upon actuation by the user severs the weakened section, thereby creating an opening in the lid through which the beverage can be dispensed, poured, or directly drunk.

In the primary volume of the beverage can, beer, the secondary compartment, and optionally a headspace may be present. In normal use, *i.e.* with the lid facing upwards, the secondary compartment may be positioned in the headspace.

The lid may comprise a weakened section partially surrounding a hatch portion of the lid. When the lid comprises a weakened section partially surrounding the hatch portion, the opening mechanism may comprise a pull tab arranged to rupture the weakened section when actuated by a user, and to move the hatch portion in a hinging movement into the primary volume. The hatch portion may remain connected to the lid via a living hinge.

In particular, the hatch portion may be arranged to, upon user actuation of the opening mechanism, break the separator such that the hop compounds in the secondary volume are exposed to the beer in the primary volume.

The secondary compartment may be at least partially positioned below the hatch portion of the lid. Additionally, or alternatively, the secondary compartment may be connected to the lid. This may facilitate convenient assembly of the beverage can, preferably using conventional roll seam equipment for connecting the lid to the can body. When the secondary compartment is connected to the lid, the secondary compartment may be separate from the can body - *i.e.* not directly connected to the can body.

Generally, the secondary volume may be defined between the secondary compartment and at least part of the lid, in particular a bottom side of the lid facing towards the primary volume. Alternatively, the secondary volume may be defined between the secondary compartment, at least part of the lid, and at least part of the can body. As an even further alternative, the secondary volume may be defined between the secondary compartment, and at least part of the can body.

The separator separating the secondary volume from the beer may comprise or consist of a thin foil, for example a thin sheet made from food-grade material, such as aluminium. When the opening mechanism is used to break the separator, the thin foil may for example be ruptured or ripped open. In general, when the separator breaks the hop compounds may fall into the beer by virtue of gravity.

Generally, the opening mechanism is arranged to irreversibly open the opening when actuated by the user. In other words, the opening mechanism cannot be used to close or seal the opening after being opened.

A second aspect of the present disclosure provides a method of forming a beverage can. The beverage can formed using the method can provide a beer with an increase hop flavour to a consumer. The method comprises steps of:
providing a can body with a primary volume and an opening into the primary volume;
filling the primary volume of the can body with a beer;
positioning a secondary compartment defining a secondary volume at least partially filled with hop compounds in the primary volume;
providing a separator separating the secondary volume from the beer; and
sealing the opening into the primary volume with a sealing member, such as a lid or cap.

The steps in the method may be performed in any order. Optionally, one or more steps may be performed simultaneously.

The sealing member, the secondary compartment, and the separator may be connected prior to the step of sealing the opening into the primary volume. As such, when the opening into the primary volume is sealed using the sealing member, the secondary compartment with the separator is conveniently positioned into the primary volume.

### BRIEF DESCRIPTION OF THE FIGURES

In the figures,
Fig. 1A and 1B schematically depict a top section of a beverage can; and
Fig. 2 shows a beverage can in an isometric view.

### DETAILED DESCRIPTION OF THE FIGURES

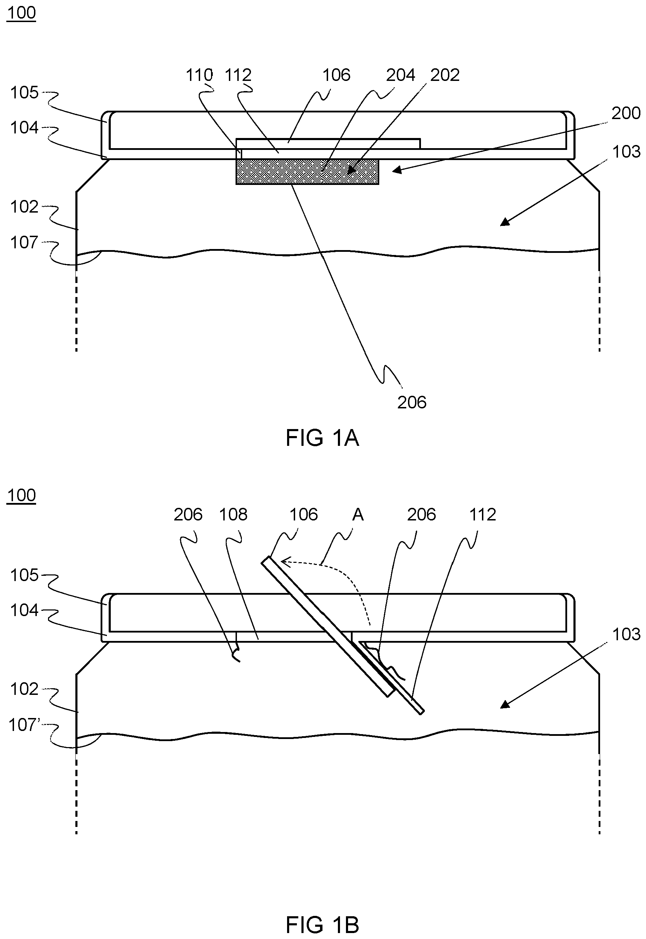

Fig. 1A and 1B schematically depict a top section of a beverage can 100 in a section view. The beverage can 100 comprises a can body 102, part of which is depicted in Figs. 1A and 1B. The can body 102 can be a cylindrical body. The can body 102 defines a primary volume 103 which is partially filled with a beer 107. The can 100 further comprises a lid 104 connected to the can body 102 and liquid-tightly sealing the primary volume 103. A headspace 105 may be present between the beer 106 and the lid 104. Optionally, the lid 104 may comprise an upward protruding rim 105.

The can 100 comprises a pull tab 106 as an opening mechanism, arranged to - when operated by a user - open up an opening 108 in the lid. Fig. 1A shows the can 100 is a situation prior to user actuation of the opening mechanism 106, and Fig. 1B shows the can 100 after user actuation of the opening mechanism 106. Dashed arrow A generally indicates a pivoting motion made by the pull tab 106 due to the user actuation.

The beverage can 100 comprises a secondary compartment 200 which is positioned inside the primary volume 103 - and thus inside the can 100. Inside the secondary compartment 200, a secondary volume 202 is defined which is filled with hop compounds 204. The hop compounds 204 can for example be in a solid form, for example as a granular material, for example as a powder or discrete granules.

In the embodiment of the beverage can 100 depicted in Figs. 1A and 1B, a thin foil 206 is used as a separator separating the secondary volume 202 from the beer 107. The thin foil 206 is arranged to ripped open when the pull tab 106 is operated by the user.

As can be seen in Fig. 1B, the thin foil 206 is ripped open when the pull tab 106 is operated, because the pull tab 106 opens a hatch portion 112 of the lid. The hatch portion 112 is typically surrounded by a weakened section 110 to aid the user in breaking the hatch portion 112 away from the rest of the lid 104. Because the hatch portion 112 is moved in a hinging movement into the primary volume 103, the opening 108 is opened in the lid 104 to allow beer 107 to be poured from the can 100.

After the foil 206 has been ripped open, the hop compounds 204 can fall into the beer 107. The beer 107 then turns into a beer 107' with an improved hop flavour by virtue of the hop compounds 204 mixing with the beer. For example when the hop compounds 204 are provided in a solid form, the hop compounds 204 can dissolve in the liquid beer.

As shown in Fig. 1A, the secondary compartment 200 can be at least partially positioned below the hatch portion 112. This allows a conventional hatch portion 112 to be used to break the thin foil 206. Such a conventional hatch portion 112 preferably has a substantially smooth lower surface facing the primary volume 103. Being substantially smooth implies that the lower surface is for example free of protrusions, in particular sharp protrusions.

As an option further shown in Fig. 1A, the secondary compartment 200 is connected to the lid 104, and particularly not directly connected to the can body 102.

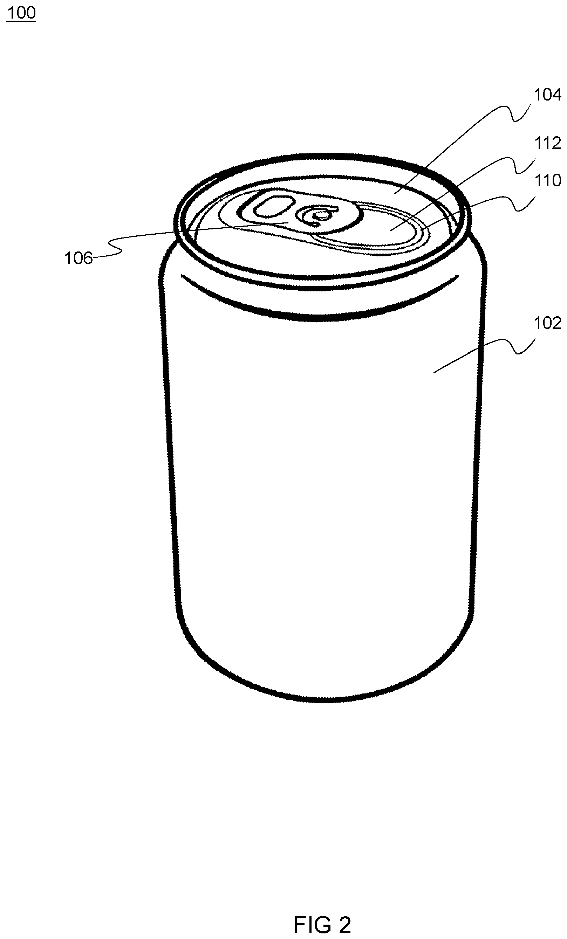

Fig. 2 shows an example of a beverage can 100 as an example of the present disclosure. The can 100 comprises the can body 102, with the lid 104 connected to the can body 102. The lid 104 comprises the weakened section 110 partially surrounding the hatch portion 112 of the lid. A pull tab 106 is provided as an opening mechanism for opening an opening in the lid such that the beer can be poured through said opening and breaking a separator of a secondary compartment positioned inside the beverage can such that hop compounds in the secondary volume are exposed to the beer in the primary volume.

As can be seen in Fig. 2, from the outside, the secondary compartment is not visible to the user as it is surrounded by the can body 102 and the lid 104. Furthermore, because the secondary compartment is positioned in the primary volume, the separator is protected from outside influences by the can body. Outside influences such as impacts may otherwise inadvertently break the separator, thereby exposing the hop compounds in the secondary volume to early - *i.e.* before the can is opened and the consumer intends to consume the beer.

In the description above, it will be understood that when an element is referred to as being connect to another element, the element is either directly connected to the other element, or intervening elements may also be present. Also, it will be understood that the values given in the description above, are given by way of example and that other values may be possible and/or may be strived for.

It is to be noted that the figures are only schematic representations of embodiments that are given by way of non-limiting examples. For the purpose of clarity and a concise description, features are described herein as part of the same or separate embodiments, however, it will be appreciated that the scope of the disclosure may include embodiments having combinations of all or some of the features described, within the scope of the claims.

## Claims

1. Beverage can (100), comprising:
- a can body (102) with a primary volume (103) partially filled with a beer (107);
- a secondary compartment (200) positioned inside the primary volume and defining a secondary volume (202), the secondary volume being at least partially filled with hop compounds (204), and comprising a separator (206) separating the secondary volume from the beer;
- a lid (104) sealing a top opening of the can body;
- an opening mechanism (106) for opening an opening (108) in the lid,
wherein the opening mechanism is arranged to, when actuated by a user:
- open the opening in the lid such that the beer can be poured through said opening; and
- break the separator such that the hop compounds in the secondary volume are exposed to the beer in the primary volume.

2. Beverage can according to claim 1, wherein the hop compounds are provided as particles of a granular material.

3. Beverage can according to claim 2, wherein the secondary volume is filled with at least ten particles, in particular at least twenty or even at least fifty particles.

4. Beverage can according to claim 1, wherein the hop compounds are provided in liquid form.

5. Beverage can according to any of the preceding claims, wherein the lid comprises a weakened section (110) partially surrounding a hatch portion (112) of the lid, and the opening mechanism comprises a pull tab (106) arranged to rupture the weakened section when actuated by a user, and to move the hatch portion in a hinging movement into the primary volume.

6. Beverage can according to claim 5, wherein the hatch portion of the lid is arranged to, upon user actuation of the opening mechanism, break the separator such that the hop compounds in the secondary volume are exposed to the beer in the primary volume, and/or wherein the secondary compartment is at least partially positioned below the hatch portion of the lid.

7. Beverage can according to any of the preceding claims, wherein the secondary compartment is connected to the lid.

8. Beverage can according to any of the preceding claims, wherein the secondary volume is defined between the secondary compartment and at least part of the lid.

9. Beverage can according to any of the preceding claims, wherein the separator comprises a thin foil.

10. Beverage can according to any of the preceding claims, wherein the secondary volume comprises at least 5 milligrams of hop compounds per litre of beer in the primary volume.

11. Beverage can according to any of the preceding claims, wherein the opening mechanism is arranged to irreversibly open the opening when actuated by the user.

12. Beverage can according to any of the preceding claims, wherein the hop compounds in the secondary compartment directly contact the lid or cap.

13. Beverage can according to any of the claims 6-12, to the extent dependent on claim 5, wherein the hatch portion has a substantially smooth lower surface facing the primary volume.

14. Method of forming a beverage can, comprising steps of:
- providing a can body with a primary volume and an opening into the primary volume;
- filling the primary volume of the can body with a beer;
- positioning a secondary compartment defining a secondary volume at least partially filled with hop compounds in the primary volume;
- providing a separator separating the secondary volume from the beer; and
- sealing the opening into the primary volume with a sealing member, such as a lid or cap.

15. Method according to claim 14, wherein the sealing member, the secondary compartment, and the separator are connected prior to the step of sealing the opening into the primary volume.

## Patentansprüche

1. Getränkedose (100), die Folgendes aufweist:
- einen Dosenkörper (102) mit einem Hauptvolumen (103), das teilweise mit Bier (107) gefüllt ist;
- eine Sekundärkammer (200), die innerhalb des Hauptvolumens angeordnet ist und ein Sekundärvolumen (202) bildet, wobei das Sekundärvolumen zumindest teilweise mit Hopfenverbindungen (204) gefüllt ist und eine Trenneinrichtung (206) aufweist, die das Sekundärvolumen vom Bier trennt;
- einen Deckel (104), der eine obere Öffnung des Dosenkörpers abdichtet;
- einen Öffnungsmechanismus (106) zum Öffnen einer Öffnung (108) im Deckel,
wobei der Öffnungsmechanismus so ausgelegt ist, dass er bei der Betätigung durch einen Benutzer:
- die Öffnung im Deckel öffnet, so dass das Bier durch diese Öffnung gegossen werden kann; und
- die Trenneinrichtung durchbricht, so dass die Hopfenverbindungen im Sekundärvolumen mit dem Bier im Hauptvolumen in Kontakt kommen.

2. Getränkedose nach Anspruch 1, wobei die Hopfenverbindungen in Form von Partikeln eines körnigen Materials vorliegen.

3. Getränkedose nach Anspruch 2, wobei das Sekundärvolumen mit mindestens zehn Partikeln, insbesondere mindestens zwanzig oder sogar mindestens fünfzig Partikeln, gefüllt ist.

4. Getränkedose nach Anspruch 1, wobei die Hopfenverbindungen in flüssiger Form vorliegen.

5. Getränkedose nach einem der vorstehenden Ansprüche, wobei der Deckel einen geschwächten Abschnitt (110) aufweist, der einen Klappenabschnitt (112) des Deckels teilweise umgibt, und der Öffnungsmechanismus eine Zuglasche (106) umfasst, die so angeordnet ist, dass sie den geschwächten Abschnitt bei Betätigung durch einen Benutzer aufreißt und den Klappenabschnitt in einer schwenkenden Bewegung in das Hauptvolumen bewegt.

6. Getränkedose nach Anspruch 5, wobei der Klappenabschnitt des Deckels so angeordnet ist, dass er bei Betätigung des Öffnungsmechanismus durch den Benutzer die Trenneinrichtung durchbricht, sodass die Hopfenverbindungen im Sekundärvolumen mit dem Bier im Hauptvolumen in Kontakt kommen, und/oder wobei sich die Sekundärkammer zumindest teilweise unterhalb des Klappenabschnitts des Deckels befindet.

7. Getränkedose nach einem der vorstehenden Ansprüche, wobei die Sekundärkammer mit dem Deckel verbunden ist.

8. Getränkedose nach einem der vorstehenden Ansprüche, wobei das Sekundärvolumen zwischen der Sekundärkammer und mindestens einem Teil des Deckels definiert ist.

9. Getränkedose nach einem der vorstehenden Ansprüche, wobei die Trenneinrichtung eine dünne Folie aufweist.

10. Getränkedose nach einem der vorstehenden Ansprüche, wobei das Sekundärvolumen mindestens 5 Milligramm Hopfenverbindungen pro Liter Bier im Hauptvolumen aufweist.

11. Getränkedose nach einem der vorstehenden Ansprüche, wobei der Öffnungsmechanismus so ausgelegt ist, dass er die Öffnung bei Betätigung durch den Benutzer irreversibel öffnet.

12. Getränkedose nach einem der vorstehenden Ansprüche, wobei die Hopfenverbindungen in der Sekundärkammer in direktem Kontakt mit dem Deckel oder der Kappe stehen.

13. Getränkedose nach einem der Ansprüche 6 bis 12, soweit von Anspruch 5 abhängig, wobei der Klappenabschnitt eine im Wesentlichen glatte, dem Hauptvolumen zugewandte Unterseite aufweist.

14. Verfahren zur Herstellung einer Getränkedose, das folgende Schritte umfasst:
- Bereitstellung eines Dosenkörpers mit einem Hauptvolumen und einer Öffnung in das Hauptvolumen;
- Füllen des Hauptvolumens des Dosenkörpers mit Bier;
- Anordnung einer Sekundärkammer, die ein Sekundärvolumen bildet, das zumindest teilweise mit Hopfenverbindungen gefüllt ist, innerhalb des Hauptvolumens;
- Bereitstellung einer Trenneinrichtung, die das Sekundärvolumen vom Bier trennt; und
- Abdichten der Öffnung zum Hauptvolumen mit einem Dichtungselement, wie beispielsweise einem Deckel oder einer Kappe.

15. Verfahren nach Anspruch 14, wobei das Dichtungselement, die Sekundärkammer und die Trenneinrichtung vor dem Schritt des Abdichtens der Öffnung zum Hauptvolumen miteinander verbunden werden.

## Revendications

1. Canette de boisson (100) comprenant :
un corps de canette (102) avec un volume principal (103) partiellement rempli avec de la bière (107) ;
un compartiment secondaire (200) positionné à l'intérieur du volume principal et définissant un volume secondaire (202), le volume secondaire étant au moins partiellement rempli avec des composés de houblon (204), et comprenant un séparateur (206) séparant le volume secondaire de la bière ;
un couvercle (104) scellant une ouverture supérieure du corps de canette ;
un mécanisme d'ouverture (106) pour ouvrir une ouverture (108) dans le couvercle,
dans laquelle le mécanisme d'ouverture est agencé pour, lorsqu'il est actionné par un utilisateur :
ouvrir l'ouverture dans le couvercle de sorte que la bière peut être versée par ladite ouverture ; et
casser le séparateur de sorte que les composés de houblon dans le volume secondaire sont exposés à la bière dans le volume principal.

2. Canette de boisson selon la revendication 1, dans laquelle les composés de houblon sont fournis sous forme de particules d'un matériau granulaire.

3. Canette de boisson selon la revendication 2, dans laquelle le volume secondaire est rempli avec au moins dix particules, en particulier au moins vingt ou même au moins cinquante particules.

4. Canette de boisson selon la revendication 1, dans laquelle les composés de houblon sont fournis sous forme liquide.

5. Canette de boisson selon l'une quelconque des revendications précédentes, dans laquelle le couvercle comprend une section de faible résistance (110) entourant partiellement une partie formant opercule (112) du couvercle, et le mécanisme d'ouverture comprend une languette de traction (106) agencée pour rompre la section de faible résistance lorsqu'elle est actionnée par un utilisateur, et pour déplacer la partie formant opercule selon un mouvement de pivotement dans le volume principal.

6. Canette de boisson selon la revendication 5, dans laquelle la partie formant opercule du couvercle est agencée pour, suite à l'actionnement par l'utilisateur du mécanisme d'ouverture, casser le séparateur de sorte que les composés de houblon, dans le volume secondaire, sont exposés à la bière dans le volume principal, et/ou dans laquelle le compartiment secondaire est au moins partiellement positionné sous la partie formant opercule du couvercle.

7. Canette de boisson selon l'une quelconque des revendications précédentes, dans laquelle le compartiment secondaire est raccordé au couvercle.

8. Canette de boisson selon l'une quelconque des revendications précédentes, dans laquelle le volume secondaire est défini entre le compartiment secondaire et au moins une partie du couvercle.

9. Canette de boisson selon l'une quelconque des revendications précédentes, dans laquelle le séparateur comprend une feuille fine.

10. Canette de boisson selon l'une quelconque des revendications précédentes, dans laquelle le volume secondaire comprend au moins 5 milligrammes de composés de houblon par litre de bière dans le volume principal.

11. Canette de boisson selon l'une quelconque des revendications précédentes, dans laquelle le mécanisme d'ouverture est agencé pour ouvrir, de manière irréversible, l'ouverture lorsqu'il est actionné par l'utilisateur.

12. Canette de boisson selon l'une quelconque des revendications précédentes, dans laquelle les composés de houblon, dans le compartiment secondaire, sont directement en contact avec le couvercle ou le capuchon.

13. Canette de boisson selon l'une quelconque des revendications 6 à 12, dans la mesure où elle dépend de la revendication 5, dans laquelle la partie formant opercule a une surface inférieure sensiblement lisse faisant face au volume principal.

14. Procédé pour former une canette de boisson, comprenant les étapes comprenant les faits de :
prévoir un corps de canette avec un volume principal et une ouverture dans le volume principal ;
remplir le volume principal du corps de canette avec de la bière ;
positionner un compartiment secondaire définissant un volume secondaire au moins partiellement rempli avec des composés de houblon dans le volume principal ;
prévoir un séparateur séparant le volume secondaire de la bière ;
et
sceller l'ouverture dans le volume principal avec un élément de scellement, tel qu'un couvercle ou un capuchon.

15. Procédé selon la revendication 14, dans lequel l'élément de scellement, le compartiment secondaire et le séparateur sont raccordés avant l'étape comprenant le fait de sceller l'ouverture dans le volume principal.
